# FASCICULE DE BREVET EUROPEEN

(11) **EP 1 477 009 B1**
(45) Date de publication et mention de la délivrance du brevet: **02.09.2009**
(21) Numéro de dépôt: 03731730.2
(22) Date de dépôt: 15.01.2003
(51) Int. Cl.: H04L 29/06, H04N 5/913

(54) **DISPOSITIF POUR SECURISER LA TRANSMISSION, L'ENREGISTREMENT ET LA VISUALISATION DE PROGRAMMES AUDIOVISUELS**
EINRICHTUNG ZUR SICHEREN ÜBERTRAGUNGSAUFZEICHNUNG UND VISUALISIERUNG AUDIOVISUELLER PROGRAMME
DEVICE FOR SECURE TRANSMISSION RECORDING AND VISUALISATION OF AUDIOVISUAL PROGRAMMES

(30) Priorité: 18.01.2002 FR 0200635
(43) Date de publication de la demande: 17.11.2004
(73) Titulaire: Medialive, 75116 Paris (FR)
(72) Inventeur: LECOMTE, Daniel, F-75116 Paris (FR)
(74) Mandataire: Breese, Pierre
(86) Numéro de dépôt international: PCT/FR2003/000122
(87) Numéro de publication internationale: WO 2003/063445

(56) Documents cités:
- US-A- 5 892 825
- US-A- 5 937 164

## Description

La présente invention concerne le traitement, la diffusion, l'enregistrement et la visualisation sécurisée de données vidéo et de programmes de télévision, ou plus généralement n'importe quel programme ou séquence multimédia utilisant un format de flux nominal de type MPEG, par des utilisateurs autorisés et propose un système sécurisé pour le traitement, la diffusion, la livraison, l'enregistrement, la copie privée et la visualisation de programmes et de séquences vidéo ou multimédia interactifs.

Le problème général est de fournir un dispositif capable de transmettre de façon sécurisée un ensemble de films de haute qualité visuelle à un format de type MPEG en direct vers un écran de télévision et/ou pour être enregistré sur le disque dur d'un boîtier reliant le réseau de télétransmission à l'écran de télévision, tout en préservant la qualité audiovisuelle mais en évitant toute utilisation frauduleuse comme la possibilité de faire des copies pirates de films ou de programmes audiovisuels enregistrés sur le disque dur du boîtier décodeur.

L'invention permet également un contrôle total de l'utilisation des copies et des droits des oeuvres diffusées.

Avec les solutions actuelles, il est possible de transmettre des films et des programmes audiovisuels sous forme numérique via des réseaux de diffusion de type hertzien, câble, satellite, etc. ou via des réseaux de télécommunication type DSL (Digital Subscriber Line) ou BLR (boucle locale radio) ou des réseaux DAB (Digital Audio Broadcasting). Par ailleurs, pour éviter le piratage des oeuvres ainsi diffusées, ces dernières sont souvent cryptées par divers moyens bien connus de l'homme de l'art.

Toutefois, l'inconvénient principal de toutes les solutions actuelles (TiVo Inc., WO00165762) est qu'il faut transmettre non seulement les données cryptées vers les utilisateurs, mais également les clés de décryptage. La transmission des clés de décryptage pouvant se faire avant, en même temps ou après la transmission des programmes audiovisuels. Pour augmenter la sécurité et donc la protection des oeuvres audiovisuelles contre une utilisation mal intentionnée, les clés de décryptage ainsi que les fonctions de décryptage des décodeurs audiovisuels peuvent comporter des moyens de sécurité améliorés comme des cartes à puces ou autres clés physiques qui peuvent en option, être mises à jour à distance.

Ainsi, les solutions actuelles appliquées à un boîtier décodeur avec possibilité d'enregistrement local de programmes audiovisuels sous forme numérique sur un support quelconque de type disque dur ou autre type de mémoire, offrent à un usager mal intentionné, la possibilité de faire des copies non autorisées des programmes ainsi enregistrés, puisqu'à un moment donné, cet usager possède avec son boîtier décodeur numérique, associé ou pas à des systèmes de cartes à puce, toutes les informations, programmes logiciels et données permettant le décryptage complet des programmes audiovisuels. En raison justement du fait qu'il possède toutes les données, l'usager mal intentionné aura la possibilité de faire des copies illégales sans que personne ne s'aperçoive de cette copie frauduleuse au moment où elle est faite.

Une solution consisterait donc à transmettre tout ou partie d'un programme audiovisuel numérique uniquement à la demande (services de vidéo à la demande) à travers un réseau de télécommunication large bande de type ADSL, câble ou satellite, sans autoriser l'enregistrement local des programmes audiovisuels. Ici, l'inconvénient est tout autre et provient des performances de ces réseaux qui ne permettent pas de garantir des flux continus de quelques mégabits pas seconde à chaque usager, comme exigé par les flux MPEG qui nécessitent des bandes passantes de quelques centaines de kilobits à plusieurs mégabits par seconde.

Dans ces conditions, une solution consiste à séparer le flux en deux parties dont aucune ne serait utilisable seule. Dans cette optique plusieurs brevets ont été déposés. Ainsi, on connaît par le document WO09908428 (Gilles Maton) un procédé de traitement multi-applicatif d'un terminal actif localisable dans lequel on réalise au moins une liaison avec un programme identifiable dédié à l'exécution d'une application, ledit programme dictant ses conditions d'exploitation au terminal pour la mise à disposition des fonctions. Le terminal dialogue ponctuellement, par l'emploi d'une liaison, avec le centre de gestion pour la réalisation, si nécessaire, des entrées et sorties des capacités de ce dernier, le centre de gestion devenant esclave ou non du terminal au niveau de l'applicatif vis-à-vis du programme entrant. Cette invention concerne également le procédé d'identification du programme et du terminal en exploitation. Ce procédé de l'art antérieur divise le flux en une partie servant à identifier l'utilisateur et une partie qui contient le programme à proprement parler. En particulier, ledit programme n'est pas inutilisable mais seulement verrouillé par la première partie.

D'autre part, le document EP0778513 (Matsushita) qui décrit un procédé permettant de prévenir l'utilisation illégale d'une information en y ajoutant une information de contrôle afin de vérifier les droits de l'utilisateur. Le système permet de savoir en permanence quelle partie de l'information est utilisée et par quel utilisateur et par là de savoir si cet utilisateur est en position illégale ou pas. Ce procédé sécurise donc les données en y ajoutant des informations additionnelles qui dénaturent l'information initiale.

Le document WO0049483 (Netquartz) nous offre également des procédés et des systèmes pour créer un lien entre les utilisateurs et un éditeur d'entités numérisées. Le procédé comprend l'une au moins des étapes suivantes : l'étape de subdiviser ladite entité numérisée en deux parties ; l'étape de mémoriser une partie dans une zone mémoire d'un serveur connecté à un réseau informatique ; l'étape de transmettre l'autre partie à au moins un utilisateur disposant d'un équipement informatique ; l'étape de connecter ledit équipement informatique audit réseau informatique ; l'étape d'établir un lien fonctionnel entre ladite première partie et ladite deuxième partie. Ces procédés et systèmes ne spécifient pas si la partie mémorisée sur le serveur peut être stockée par l'utilisateur ce qui permettrait à celui-ci de pirater ladite entité numérisée.

Enfin, dans cette approche, l'état de la technique le plus proche se retrouve dans les brevets d'HyperLOCK Technologies dont le plus pertinent est le document US05937164.

Ce document US-A-5,937164 enseigne un procédé selon le préambule de la revendication 1.

L'invention objet de cette demande utilise la solution qui consiste à séparer le flux en deux : le premier flux (« the crippled file ») ne peut être visualisé qu'en récupérant la deuxième partie (« encoded key » or « trigger » ). L'opération de protection (« crippling ») consiste à enlever l'entête du fichier audiovisuel. Le « crippling » peut aussi comprendre d'autres types d'opération appliquées au flux d'origine : cacher le fichier audiovisuel du point de vue système de gestion de fichiers, changer l'extension du fichier audiovisuel ou compresser le fichier audiovisuel en format ZIP.

Cependant, ce document n'est pas suffisant pour répondre au problème identifié. En effet, la suppression d'une partie du flux ou les autres types d'opérations décrites par ce brevet dénaturent le format du flux, et ne peut donc pas être reconnu comme un flux standard, exploitable avec des applications logicielles générales. Ce procédé de l'art antérieur nécessite à la fois un logiciel spécifique côté serveur, pour la séparation des deux parties, et un autre logiciel spécifique assurant non seulement la reconstruction du flux, mais également l'acquisition du flux principal et son exploitation selon un format propriétaire à la solution. Ce format propriétaire n'est pas le format initial du flux avant séparation en deux parties, dans cette solution connue.

Cette société a également déposé trois autres brevets : le document US5892825 reprend le brevet précédent mais dans un cadre moins large car les flux y sont toujours cryptés ; le document US6035329 repose sur le même principe, il concerne un procédé permettant la lecture d'un disque de type CD-ROM ou DVD-ROM conditionnellement à l'identification des droits par l'insertion d'une carte à puce sur laquelle les informations nécessaires à la lecture sont stockées. Ce procédé n'est encore pas suffisant pour notre problème car il ne garantit pas que le flux modifié soit du même format que le flux originel. Enfin, le document US6185306 concerne un procédé de transmission de données cryptées depuis un site web vers un ordinateur demandeur. Ce procédé permet cependant à l'utilisateur de disposer à un moment donné de tous les outils nécessaires pour copier les données.

Afin de corriger ces différents défauts, l'invention concerne un procédé selon la revendication 1.

Avantageusement, ladite synthèse produit un flux rigoureusement identique au flux originel, c'est-à-dire que le procédé est sans perte.

Des modes de réalisation de l'invention sont décrits dans les revendications dépendantes.

Dans une mise en oeuvre particulière de ce procédé, la transmission dudit premier flux est réalisée à travers un support matériel distribué physiquement comme un CD-ROM, un DVD ou un disque dur.

Dans une autre mise en oeuvre de ce procédé, la transmission dudit premier flux est réalisée à travers un réseau large bande (câble, satellite, fibre optique, hertzien), à travers un réseau de type DSL (Digital Subscriber Line), à travers un réseau DAB ou à travers un réseau de boucle locale radio (BLR).

Selon la mise en oeuvre de ce procédé, la transmission dudit deuxième flux est réalisée à travers un réseau câblé, à travers un réseau téléphonique commuté (RTC analogique ou numérique), à travers un réseau téléphonique mobile utilisant les normes GSM, GPRS ou UMTS, à travers un réseau BLR (boucle locale radio) ou à travers un réseau de type DSL.

Selon une variante particulière de ce procédé, la transmission dudit deuxième flux est réalisée à travers un réseau large bande de même type que le réseau utilisé par ledit premier flux, voire à travers le même réseau.

Avantageusement, la transmission d'un des deux flux ou des deux flux est chiffrée.

Avantageusement, l'un et/ou les deux flux peut être tatoué [watermarking].

Selon un mode de réalisation particulier, la reconstruction est conditionnée par un paiement.

La reconstruction peut également être autorisée pour une consultation d'une copie privée demandée par le client.

De plus, l'invention concerne un équipement pour la fabrication d'un flux vidéo en vue de la mise en oeuvre de ce procédé comportant au moins un serveur multimédia contenant les séquences vidéos originelles et **caractérisé en ce qu**'il comporte un dispositif d'analyse du flux vidéo provenant dudit serveur pour générer les deux flux.

Avantageusement, cet équipement comporte une mémoire pour l'enregistrement d'un marqueur « copie privée » indiquant pour chaque séquence les droits de chaque utilisateur : copie privée pouvant être regardée un nombre illimité de fois, copie privée pouvant être regardée un nombre limité de fois et quel nombre, copie privée interdite.

En outre, l'invention concerne un équipement pour l'exploitation d'un flux vidéo en vue de la mise en oeuvre de ce procédé comprenant un décodeur standard de flux, au moins une interface d'enregistrement (disque dur, mémoire flash, etc.) destiné à stocker le contenu dudit premier flux et/ou une lecteur de disque (CD, DVD, etc.) contenant ledit premier flux et au moins une interface d'affichage (écran standard, écran sans fil, vidéoprojecteur) **caractérisé en ce qu**'il comporte un moyen pour la recomposition du flux originel à partir des deux flux.

Selon un mode de réalisation particulier, ledit moyen est une application logicielle installée sur l'équipement.

Selon un autre mode de réalisation, ledit moyen est un dispositif électronique fixe.

Selon un autre mode de réalisation, ledit moyen est un dispositif électronique mobile ou portable.

Selon un mode de réalisation où l'équipement est installé sur un ordinateur, ledit moyen utilise une ressource spécifique au produit (carte) afin d'éviter la copie de l'information temporaire du deuxième flux sur un support permanent.

Avantageusement, ladite interface d'enregistrement stocke aussi un marqueur « copie privée » en relation avec ledit premier flux indiquant pour cette séquence les droits de l'utilisateur : copie privée pouvant être regardée un nombre illimité de fois, copie privée pouvant être regardée un nombre limité de fois et quel nombre, copie privée interdite.

Avantageusement, l'équipement comprend un lecteur de cartes à puce permettant d'identifier l'usager.

Avantageusement, l'équipement comprend un lecteur de cartes à puce, la carte à puce contenant les applications logicielles et/ou les données du deuxième flux.

Une variante de mise en oeuvre consiste à réaliser l'équipement « client » sous forme de deux moyens interconnectés par une liaison physique ou une liaison à distance (Bluethooth, AirPort, WIFI, infrarouge, ...). Selon cette variante, l'équipement pour l'exploitation d'un flux vidéo comporte un premier moyen constitué par un ordinateur personnel équipement d'une interface de communication pour la réception d'un flux vidéo en provenance d'un réseau de communication ou d'un lecteur de support physique, et muni d'au moins un moyen d'enregistrement [disque dur] destiné à stocker le contenu dudit premier flux, et un second moyen constitué par un décodeur, comprenant une interface d'affichage, des moyens de communication avec ledit ordinateur principal pour recevoir ledit premier flux transmis par l'ordinateur et des moyens de communication pour recevoir ledit deuxième flux, ainsi qu'un moyen pour la recomposition du flux originel à partir des deux flux.

Selon un premier mode de réalisation, ledit moyen pour la recomposition du flux est une application logicielle installée sur ledit décodeur seulement.

Selon un deuxième mode de réalisation, ledit moyen pour la recomposition du flux est un dispositif électronique installé sur ledit décodeur seulement.

Enfin, l'invention concerne un système pour la transmission d'un flux vidéo **caractérisé en ce qu**'il comprend un équipement de production d'un flux vidéo, au moins un équipement d'exploitation d'un flux vidéo et au moins un réseau de communication entre l'équipement de production et le(s) équipement(s) d'exploitation.

La présente invention sera mieux comprise à la lecture de la description d'un exemple non limitatif de réalisation qui suit, se référant aux dessins annexés où :
- la figure 1 décrit l'architecture d'ensemble d'un système pour la mise en oeuvre du procédé selon l'invention
- la figure 2 représente un mode de réalisation particulier du système d'analyse et de synthèse de flux de type MPEG conforme à l'invention.

L'invention concerne un flux de données d'un format nominal, notamment mais non exclusivement un flux de type MPEG. Le format du flux audiovisuel utilisé doit avoir les caractéristiques suivantes :
- ce format doit décomposer les données en trames [frame], chaque trame comprenant une image numérique I complète et au moins une image P calculée en codant les différences (compensation de mouvement) entre cette image et l'image I ou P précédente ;
- optionnellement, chaque trame comprend au moins une image B calculée en codant les différences (compensation de mouvement) entre cette image et les images I et/ou P précédente et suivante.

Dans la description qui suit, l'exemple concerne un flux MPEG sans que cela ne constitue une limitation de la portée de la protection.

Le principe général d'un procédé de sécurisation d'un flux vidéo est exposé ci-après. L'objectif est d'autoriser les services de vidéo à la demande et à la demande à travers tous ces réseaux de diffusion et l'enregistrement local dans le boîtier décodeur numérique de l'usager. La solution consiste à conserver en permanence à l'extérieur de l'habitation de l'usager, en fait dans le réseau de diffusion et de transmission, une partie du programme audiovisuel enregistré, cette partie étant primordiale pour visualiser ledit programme audiovisuel sur un écran de télévision ou de type moniteur, mais étant d'un volume très faible par rapport au volume total du programme audiovisuel numérique enregistré chez l'usager. La partie manquante sera transmise via le réseau de diffusion transmission au moment de la visualisation dudit programme audiovisuel numérique préenregistré chez l'usager.

Le plus grande partie du flux audiovisuel de type MPEG sera donc transmise via un réseau de diffusion classique alors que la partie manquante sera envoyée à la demande via un réseau de télécommunication bande étroite comme les réseaux téléphoniques classiques ou en utilisant une petite partie d'un réseau de type DSL ou BLR, ou encore en utilisant un sous-ensemble de la bande passante partagée sur un réseau câblé.

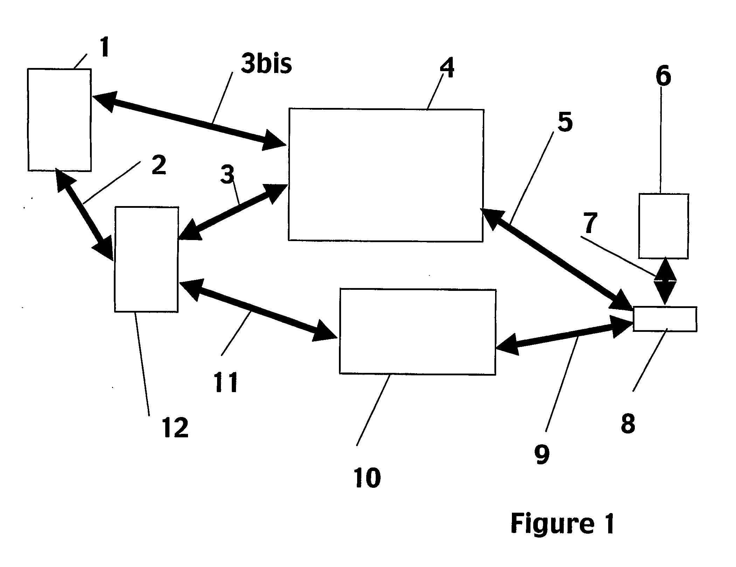

Sur le dessin en annexe, la figure 1 est un schéma de principe d'un système de distribution selon la présente invention.

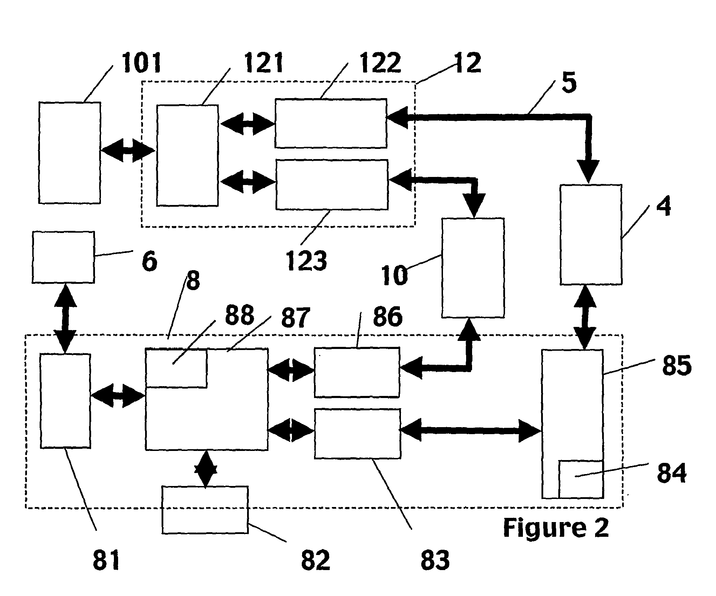

La figure 2 représente un mode de réalisation particulier du système d'analyse et de synthèse de flux de type MPEG conforme à l'invention.

Sur la figure 1, l'agencement d'interfaçage vidéo (8) est adapté pour relier au moins un dispositif d'affichage, par exemple un moniteur, un vidéo projecteur ou un dispositif de type écran de télévision (6), à au moins une interface de réseau de transmission et de diffusion large bande (4) et à au moins une interface de réseau de télécommunication (10). Selon la présente invention, cet agencement est composé d'un module (8) comprenant principalement, d'une part, une unité de traitement adaptée pour traiter, en particulier décoder et désembrouiller tout flux vidéo de type MPEG selon un programme logiciel de décodage et désembrouillage pré-chargé, de manière à l'afficher, en temps réel ou différé, de le stocker, de l'enregistrer et/ou de l'envoyer sur un réseau de télécommunication et, d'autre part, au moins une interface d'écran (7) et une interface de connexion à un réseau local ou étendu (5) et/ou (9). Le réseau de transmission et de diffusion large bande (4) et le réseau de télécommunication (10) pouvant être confondus en un seul réseau.

Le disque dur du module (8) peut être utilisé comme mémoire tampon pour stocker momentanément au moins une partie du programme ou de la séquence vidéo à afficher, en cas de visualisation différée ou de limitation dans la bande passante du réseau de transmission. La visualisation peut être retardée ou différée à la demande de l'utilisateur ou du serveur de portail (12).

Comme le montre la figure 1, l'interface de connexion (5) est reliée à un réseau de transmission et de diffusion large bande (4) telle qu'un modem, un modem satellite, un modem câblé, d'une interface de ligne à fibre optique ou d'une interface radio ou infrarouge pour la communication sans-fil.

C'est par cette liaison classique de diffusion vidéo que seront transmis les contenus des programmes audiovisuels comme des films. Toutefois, de façon à ne pas laisser faire de copies pirates, avant de transmettre le contenu audiovisuel depuis le serveur (1) ou le portail (12) il est prévu de conserver une petite partie du contenu audiovisuel dans le portail (12).

En cas de visualisation d'un programme audiovisuel en temps réel, cette petite partie du contenu audiovisuel conservée dans le portail (12) sera également envoyée au module (8) via le réseau de télécommunication (10).

Comme les images successives d'une séquence vidéo comportent un grand nombre d'éléments visuels identiques (comme en cinéma, une image ressemble à la précédente), MPEG n'enregistre que les éléments qui diffèrent de l'image d'origine. On conserve donc une image entière de référence et, pour les images successives, on ne garde que les modifications.

La compression MPEG commence donc, dans un premier temps, par décomposer l'image en différentes matrices carrées comportant plusieurs points ou pixels, ayant chacun leur propre valeur colorimétrique. Un calcul permet d'obtenir une valeur moyenne pour chaque matrice au sein de laquelle chaque point est maintenant noyé. Ce traitement génère une pixélisation et l'apparition d'aplats uniformes, là où existaient des nuances de teinte. La deuxième étape de la compression MPEG consiste à ne conserver d'une image à l'autre que les éléments changeants.

Pour obtenir des images animées, le principe consiste à capter quelques images dans le temps, les images intermédiaires étant calculées à partir de celles-ci. L'analyse des images de référence complètes (dites I pour Intra-frame) permet de prédire des images intermédiaires P (Predicted frames). Ensuite, on intercale entre images de référence et images prédites, des images B (Bidirectional Frame).

Trois grands types d'images sont ainsi définis pour répondre aux impératifs contradictoires d'une possibilité d'accès direct et d'une haute efficacité de compression.
1- Les images à codage Intra (images I) sont codées sans référence aux autres images. Elles fournissent des points d'accès à la séquence codée où le décodage peut commencer, mais sont codées avec un taux de compression modéré.
2- Les images codées par Prédiction (images P) présentent un codage plus efficace, utilisant une prédiction compensée en mouvement, d'après une image antérieure, intra (I) ou prédite (P), et sont généralement utilisées comme référence pour une prédiction future.
3- Les images codées par prédiction Bidirectionnelle (images B) offrent le taux le plus élevé de compression, mais nécessitent pour la compensation du mouvement, une image de référence antérieure et une image de référence future. Les images codées par prédiction bidirectionnelle ne sont jamais utilisées comme référence de prédiction.

L'organisation des trois types d'images en une séquence est très souple : son choix est laissé au codeur, et dépend des besoins de l'application.

Lorsqu'il lit le train binaire, un décodeur classique MPEG identifie le début d'une image codée, puis le type de l'image. Pour éviter toute confusion entre un boîtier décodeur standard souvent appelé « Set Top Box ou STB », le décodeur classique MPEG sera appelé « Lecteur » (« Player » ou « Viewer ») dans la suite du document. Ce Lecteur peut être réalisé en hardware et/ou en software. Le lecteur MPEG décode successivement chaque macrobloc de l'image. L'image est reconstruite quand tous ces macroblocs ont été traités. S'il s'agit d'une image I ou d'une image P, elle constitue une image de référence pour les images subséquentes et elle est stockée à la place de l'image de référence la plus ancienne (car deux images de référence sont stockées afin de calculer les images B). Les images sont ainsi disponibles, sous forme numérique, pour post-traitement et affichage, au gré de l'application.

Dans le cas d'un programme audiovisuel de type MPEG, il est prévu de ne pas transmettre toutes les images B et/ou P en provenance du serveur (1) ou du portail (12) vers le module (8). Ces images B et/ou P étant conservées dans le portail (12). Par contre, en lieu et place des images B et/ou P non transmises, le dispositif conforme à l'invention intercalera de fausses images B et/ou P de même nature que les images B et/ou P enlevées et conservées dans le portail (12) de sorte que le Lecteur MPEG du module (8) ne soit pas perturbé par ces modifications qu'il ignorera et reconstituera en sortie un flux de sortie MPEG qui sera non correct du point de vue visuel pour un être humain mais correct du point de vue format MPEG.

Le Lecteur MPEG du boîtier (8) est un Lecteur standard MPEG et n'est en aucune manière modifié ou affecté par les changements apportés aux images B et/ou P.

Selon un mode de réalisation particulier, pour augmenter l'efficacité du système de protection, il est préférable de ne pas envoyer les images B et/ou P qui sont les plus proches et qui suivent des images I du flux MPEG. Pour une efficacité encore plus grande, après analyse de leur volume et de leur poids en octets ou en bits, les images B et/ou P seront choisies pour être non transmises et conservées dans le portail (12).

Selon un mode de réalisation particulier certaines images P et/ou B seront permutées entre elles.

Comme le montre la figure 1, l'interface de connexion (9) est reliée à un réseau de télécommunication étendu (10), directement ou par un réseau local servant de réseau d'accès et est constitué par exemple d'une interface de ligne d'abonné (Réseau téléphonique analogique ou numérique, DSL, BLR, GSM, GPRS, UMTS, etc).

Ainsi donc, les programmes audiovisuels sont diffusés de façon classique en mode multidiffusion (« broadcast ») via le réseau de transmission large bande (4) de type hertzien, câble, satellite, numérique hertzien, DAB, DSL, etc. depuis le serveur (1) directement via la liaison (3bis) ou via le portail (12) via la liaison (2) et (3) vers le module décodeur (8) à travers la liaison (5). Chaque programme audiovisuel ainsi diffusé peut être crypté ou non, et, conformément à la présente invention, les flux de type MPEG comportent des modifications au niveau des images B et/ou P comme décrit ci-dessus. En fonction des paramètres choisis par l'usager ou des informations transmises par le serveur de diffusion, certains programmes audiovisuels ainsi modifiés et incomplets sont enregistrés dans le disque dur du boîtier (8).

Lorsque l'usager désire visualiser un programme audiovisuel ainsi enregistré dans le disque dur de son boîtier (8) il en fait la demande de façon classique au moyen d'une télécommande relié à son boîtier (8) qui se connecte alors automatiquement au portail (12) via la liaison (9) de type réseau local ou accès direct et à travers le réseau de télécommunication (10) lui-même relié au portail (12) via la liaison (11). Tout au long de la visualisation du programme audiovisuel, les liaisons (9) et (11) restent établies et permettent au boîtier (8) de recevoir les images B et/ou P manquantes ainsi que les algorithmes, les fonctions et les paramètres de remise en ordre des images B et/ou P. Les images B et/ou P ainsi transmises ne sont jamais enregistrées dans le disque dur du boîtier (8) mais sont directement affichées sur l'écran de visualisation (6) via la liaison (7) après avoir été traitées par le Lecteur du boîtier (8) à partir de sa mémoire locale volatile. Une fois traitées et visualisées, les images B et/ou P venant d'être transmises seront effacées de la mémoire volatile locale du boîtier (8).

Selon un mode de réalisation particulier les images P et/ou B ainsi diffusées peut être cryptées ou non, par tout moyen de cryptage existant ou à venir. Il en est de même pour les algorithmes, les fonctions et les paramètres de remise en ordre des images B et/ou P.

A chaque fois que l'usager voudra regarder un programme enregistré dans le disque dur du boîtier (8) le boîtier (8) se connectera automatiquement vers le portail (12). De même lorsque l'usager fera une pause, la transmission des images B et/ou P en provenance du portail (12) sera interrompue jusqu'à la reprise de la visualisation, garantissant ainsi que toutes les informations d'un programme audiovisuel ne se retrouvent dans le boîtier (8) à un moment donné et évitant ainsi à une personne mal intentionnée de faire des copies pirates de ces enregistrements.

Selon un mode de réalisation particulier, le boîtier (8) comprend un lecteur de carte à puce qui permettra au portail (12) d'authentifier l'usager propriétaire du boîtier (8). Si cela est autorisé, cette fonction permettra également à l'usager d'effectuer des copies privées des programmes audiovisuels enregistrés sur le disque dur de son boîtier décodeur (8). Pour cela, si l'usager veut faire une copie privée d'un programme audiovisuel, il le fera de façon classique sur un magnétoscope via la liaison (7) qui relie le boîtier (8) à l'écran de visualisation (6).

Par contre, s'il désire conserver une copie privée dans le disque dur de son boîtier, il l'indiquera à son boîtier (8) qui enregistrera l'information « copie privée » ainsi que les coordonnées de l'usager se trouvant sur la carte à puce, dans un champ particulier (84) de ce programme audiovisuel enregistré sur le disque dur (85) du boîtier décodeur (8). Ensuite, chaque fois que l'usager voudra visionner cette copie privée, le boîtier (8) se connectera automatiquement au portail (12) et indiquera à ce dernier que l'usager veut faire une lecture de sa copie privée ; en retour, si la lecture de la copie privée est possible pour cet usager qui possède cette carte à puce reliée à ce boîtier (8), le boîtier décodeur (8) recevra alors les images B et/ou P manquantes ainsi que toutes les autres informations permettant la visualisation du programme audiovisuel constituant la copie privée.

Selon un autre mode de réalisation, si l'usager désire conserver une copie privée dans le disque dur de son boîtier, il l'indiquera au serveur qui enregistrera l'information « copie privée » pour ce programme et pour cet utilisateur authentifié par la carte à puce. Ensuite, chaque fois que l'usager voudra visionner cette copie privée, le boîtier (8) se connectera automatiquement au portail (12) et indiquera à ce dernier que l'usager veut faire une lecture de sa copie privée ; en retour, si la lecture de la copie privée est possible pour cet usager qui possède cette carte à puce et pour ce programme, le boîtier décodeur (8) recevra alors les images B et/ou P manquantes ainsi que toutes les autres informations permettant la visualisation du programme audiovisuel constituant la copie privée.

Selon un mode de réalisation particulier, la copie dite privée pourra permettre à l'usager de regarder ce même programme audiovisuel de façon illimitée ou un nombre de fois déterminée à l'avance par l'offreur du service qui a autorisé cette copie privée.

La présente invention concerne également le boîtier physique (8) utilisé par le consommateur pour accéder aux données. Ce boîtier physique est situé au domicile de l'utilisateur. Il fournit un ensemble de fonctionnalités qui gèrent l'information appropriée à présenter selon la sélection de l'audience et gère la connexion et la communication avec le serveur distant.

Selon un mode de réalisation particulier le boîtier physique correspondant à l'agencement d'interfaçage vidéo (8) est réalisé comme un dispositif autonome avec disque dur intégré.

Selon un autre mode de réalisation particulier l'agencement d'interfaçage vidéo (8) est réalisé comme une carte additionnelle qui sera installée dans un ordinateur de type PC et sera reliée à au moins une interface de réseau de transmission et de diffusion large bande (4) et à au moins une interface de réseau de télécommunication (10). Cette carte utilisera le disque dur de l'ordinateur PC pour l'enregistrement du premier flux mais comportera son propre calculateur et sa propre mémoire volatile de façon à ne pas laisser à l'utilisateur du PC mal intentionné le moyen d'accéder aux informations complémentaires du deuxième flux comme les images B et/ou P.

Selon la présente invention, les serveurs vidéo et multimédia (1) et/ou (12) comprennent des moyens de codage, de transcodage et de brouillage de données vidéo, en particulier des moyens d'ajouter des informations cryptographiques et de sécurité au début et tout au long des séquences.

Il est enfin à noter que l'invention dégrade le flux MPEG du point de vue visuel jusqu'à ne plus permettre la reconnaissance des scènes transmises et affichées sans avoir accès aux données complémentaires, mais reconstitue totalement le flux MPEG dans l'agencement d'interfaçage vidéo (8) sans aucune perte.

Bien que la présente invention soit plus particulièrement axée sur les données audiovisuelles, il est entendu que toute information multimédia interactive et toutes données interactives peuvent être traitées par le présent agencement et le présent système, les données vidéo de type MPEG étant les plus élaborées. La présente invention sera mieux comprise grâce à la description suivante présentant la base physique de la présente invention et en référence à la figure 2 du dessin en annexe représentant un mode de réalisation préféré de cette dernière en tant qu'exemple non limitatif de réalisation particulièrement bien adaptée pour les réseaux câblés et de satellites. Le flux MPEG (101) complet est analysé par le dispositif d'analyse (121) du portail (12) et sera ainsi séparé en un flux de type MPEG mais dont les images B et/ou P auront été traitées et qui sera envoyé via la sortie (122) du portail vers le réseau de diffusion transmission large bande (4).

L'autre partie du flux MPEG modifié sera mémorisée dans la mémoire tampon (122) du portail (12). Pour chaque flux MPEG ainsi diffusé, le portail (12) conservera dans une mémoire tampon (122) les modifications qui auront été apportées à ce flux MPEG par l'analyseur (121) du portail (12). I1 est précisé que, pour un même flux d'entrée MPEG (101) le traitement du flux peut être différent pour chaque utilisateur (8) et/ou pour chaque groupe d'utilisateurs (8). Ainsi, la mémoire tampon (123) du portail (12) comprend une zone de mémoire différente pour chaque utilisateur.

Dans les exemples réalisés, pour un premier utilisateur (8), chaque première image P du flux MPEG qui suivait une image I a été remplacée par une image P aléatoire de même nature et de même volume que l'image P ainsi enlevé. Il est constaté que les effets dégradants produits sur le flux de sortie sont très importants.

Pour un deuxième utilisateur (8), la nième image P qui suit chaque image I du flux MPEG a été permutée par et avec la première image B qui suit cette image P. Il a été constaté que cette permutation est très efficace pour les séquence animées de type MPEG par rapport aux séquences MPEG présentant peu d'animation.

Décrivons maintenant en détail les différentes étapes pour ce premier utilisateur.

Le portail (121) a choisi le flux MPEG (101) qu'il va devoir envoyer à l'utilisateur (8) pour être regardé en différé sur son écran de télévision (6). Cet utilisateur est relié à un réseau câblé numérique de diffusion (4) avec possibilité de vidéo à la demande (VOD), le réseau (10) est donc confondu avec le réseau (4). Le système d'analyse (121) du portail (12) va donc lire le flux entrant MPEG (101) et, chaque fois qu'il détecte une image I, il recherche la première image P qui suit cette image I pour la remplacer par une image P aléatoire qu'il a lui-même calculée. Le nouveau flux MPEG modifié est alors enregistré dans le tampon de sortie (122) pour être diffusé sur le réseau de diffusion (4) à travers la liaison (5). Les images P enlevées du flux MPEG entrant (101) sont mémorisées dans le tampon (123) du portail (12). Dans l'exemple réalisé, au lieu de substituer chaque image P qui suit une image I, le système d'analyse (12) ne prend qu'une image I sur n où n est un nombre aléatoire compris entre 1 et 7. Lorsque le système d'analyse (121) inscrit l'image P substituée dans le tampon (123), il inscrit également le numéro de l'image I qui précède cette image P ainsi substituée. Le système d'analyse (121) continue son analyse jusqu'à la fin du flux d'entrée MPEG.

Pendant ce temps, et de façon totalement non synchronisée, le flux de sortie MPEG modifié en provenance du tampon de sortie (122) du portail (12) est diffusé via le réseau large bande (4) vers un ou plusieurs utilisateurs (8).

Chaque boîtier décodeur (8) qui souhaite enregistrer ce flux MPEG ainsi modifié peut alors lire ce flux MPEG et l'enregistrer sur son disque dur (85). Cette initiative d'enregistrement est laissée au décodeur (8) sous le contrôle du portail (12). Pour cela, le système d'analyse (121) avait inscrit au début du flux MPEG, une information de données supplémentaires qui précisait les destinataires de ce flux MPEG modifié. Les destinataires peuvent être ainsi un destinataire (8) particulier, et lui seul, un groupe de destinataires (8) ou l'ensemble des décodeurs (8) reliés au réseau (4).

La phase décrite ci-dessus correspond à la première phase de préparation du flux MPEG par le portail (12), à sa transmission via le réseau large bande (4) et à son enregistrement dans un décodeur (8). Ce décodeur peut alors afficher ce flux MPEG enregistré dans son disque dur. Pour cela, le système de synthèse (87) du décodeur (8) va lire le fichier MPEG depuis son disque dur (85) et va l'envoyer vers un lecteur classique MPEG (81). Si aucune donnée complémentaire n'est reçue par le système de synthèse (87), alors le flux MPEG qui parvient au lecteur (81) est traité et affiché tel quel, ce qui provoque une distorsion importante de l'affichage sur l'écran de visualisation (6). En effet, les images P substituées qui sont traitées par le système de synthèse (87) ne correspondent pas aux images P qui sont nécessaires pour une visualisation correcte, puisque ces vraies images P ont été substituées par des images P aléatoires. Par contre, comme le flux enregistré est bien un flux de type MPEG, le lecteur (81) ne fait aucune différence et affiche les informations sur l'écran de sortie (6) qui apparaissent par contre totalement incohérentes à l'être humain qui regarde l'écran (6). Toute copie du flux MPEG en provenance du disque dur (85) du boîtier (8) produira le même effet visuel lors de sa restitution par un lecteur MPEG quelconque ; toute utilisation de cette copie qui serait mal intentionnée est donc vouée à l'échec.

Lorsque l'usager du décodeur (8) veut visualiser sur son écran (6) le programme audiovisuel enregistré sur son disque dur (85), il en fait la demande au système de synthèse (87) avec sa télécommande comme il le ferait avec un magnétoscope ou un lecteur de DVD présentant un menu sur son écran de télévision. Le système de synthèse (87) fait alors une requête au disque dur (85) et commence à analyser le flux MPEG modifié en provenance du disque dur (85) via le tampon de lecture (83). Le système de synthèse (87) établit alors une liaison avec le portail (12) via le réseau de télécommunication (10) qui est dans notre exemple également le réseau câblé, mais qui aurait pu être un réseau téléphonique classique ou une liaison DSL. Une fois cette liaison établie, et pendant toute la durée de visualisation du film ou du programme audiovisuel, le système de synthèse (87) fait parvenir de la mémoire tampon (123) du serveur (12) les images P substituées et les données correspondant aux positions de ces images P vis-à-vis des images I du flux enregistré sur le disque dur (85). Ces images P et ces données de position parviennent au système de synthèse (87) via la mémoire tampon d'entrée (86) et sont stockées temporairement dans la mémoire volatile (88) du système de synthèse (87). A partir du flux MPEG modifié qui parvient via le tampon (83) et à partir des images P et des données associées qui parviennent via le tampon (86) dans la mémoire (88), le système de synthèse (87) reconstitue de façon inverse au processus d'analyse décrit précédemment, les images P substituées par les images P réelles et envoie le nouveau flux MPEG ainsi reconstitué vers le lecteur (81) pour être affiché sur l'écran (6). Dès leur utilisation, les images P à substituer et les données associées à ces images P sont effacées de la mémoire volatile (88).

Dans l'exemple réalisé, avant que le portail (12) n'autorise l'envoi des images P et des données associées depuis son tampon (123), le portail (12) a vérifié que l'utilisateur du boîtier (8) était bien autorisé à le faire. Pour cela, le portail (12) lit les informations contenues sur la carte à puce (82) du boîtier (8) et vérifie que cet utilisateur est bien autorisé à regarder ce programme audiovisuel. Ce n'est qu'après cette vérification, que les images P et les données associées ont été envoyées depuis le tampon (123) vers le boîtier (8) correspondant à cet utilisateur.

Dans l'exemple réalisé, l'utilisateur a fait une copie privée de son programme audiovisuel. Le système de synthèse (87) a donc inscrit dans une partie (84) du disque dur (85) des données complémentaires ainsi que le numéro de la carte à puce (82) et l'information « copie privée » comme données associées à ce programme audiovisuel. Lors de la prochaine lecture de ce programme audiovisuel, le système de synthèse (87) analysera ces données associées et informera ainsi le portail (12) que l'usager du décodeur (8) fait une lecture de la copie privée. Si cette fonction est autorisée par le portail (12), les images P et les données associées seront alors envoyées par le portail (12) vers le tampon (86) comme décrit ci-dessus. Dans le cas contraire, les données ne seront pas envoyées et l'utilisateur du décodeur (8) ne pourra pas regarder le flux MPEG reconstitué.

Décrivons maintenant en détail les différentes étapes pour le deuxième utilisateur (8).

Dans ce deuxième cas, le réseau de diffusion (4) est un réseau de satellites et le réseau de télécommunication (10) est un système hertzien de type boucle locale radio (BLR).

De façon identique à la description ci-dessus, l'utilisateur du décodeur (8) va recevoir les flux MPEG et les données complémentaires depuis le portail (12). Par contre, avant l'envoi du flux MPEG à partir du tampon de sortie (122), le système d'analyse (121) va lire le flux d'entrée MPEG (101) et après tirage d'un nombre aléatoire n compris entre 1 et 4, le système de synthèse permute la nième image P qui suit chaque image I du flux MPEG avec la première image B qui suit cette image P. Chaque nombre aléatoire ainsi utilisé est enregistré dans le tampon (123) du portail (12).

Lors de la reconstitution du flux MPEG par le système de synthèse (87) du décodeur (8), la lecture de ces nombres aléatoires depuis le portail (12) et la lecture du flux MPEG ainsi modifié depuis le disque dur (85) du boîtier (8) permettent au système de synthèse (87) de remettre les images B et P dans le bon ordre et d'envoyer le tout au lecteur (81).

## Revendications

1. Procédé pour la distribution de séquences vidéo depuis un serveur (12) vers un équipement destinataire (8), les séquences vidéo ayant un format de flux nominal (101) constitué par une succession de trames comprenant chacune une image complète I ou une image différentielle du type B ou P, le procédé comprenant des étapes dans lesquelles :
avant la transmission à l'équipement destinataire (8),
- on analyse (121) ledit flux nominal afin de générer un premier flux modifié ;
- on génère un deuxième flux d'un format quelconque, comportant les informations numériques aptes à permettre la reconstruction dudit flux nominal à partir dudit premier flux modifié ;
puis,
- on transmet séparément les deux flux ainsi générés depuis le serveur (12) vers l'équipement destinataire (8) ;
- on calcule (87) sur l'équipement destinataire (8) une synthèse d'un flux au format nominal en fonction dudit premier flux et dudit deuxième flux,
le procédé étant **caractérisé en ce que** :
- ledit premier flux modifié a le même format que ledit flux nominal et comprend au moins une image numérique différentielle du type B ou P modifiée par rapport audit flux nominal.

2. Procédé selon l'une des revendications précédentes, dans lequel le format de flux nominal est défini par la norme MPEG.

3. Procédé pour la distribution de séquences vidéo selon l'une des revendications précédentes, dans lequel ladite analyse peut décider des images différentielles à modifier.

4. Procédé pour la distribution de séquences vidéos selon l'une des revendications précédentes, dans lequel la transmission dudit premier flux est réalisée à travers un support matériel distribué physiquement.

5. Procédé selon la revendication précédente dans lequel le support matériel distribué est un CD-ROM.

6. Procédé selon la revendication 4 dans lequel le support matériel distribué est un disque dur.

7. Procédé pour la distribution de séquences vidéos selon l'une des revendications 1 à 3, dans lequel la transmission dudit premier flux est réalisée à travers un réseau large bande (4).

8. Procédé selon la revendication précédente dans lequel la transmission dudit premier flux est réalisée par câble, par satellite, par réseau numérique hertzien, ou par fibre optique.

9. Procédé pour la distribution de séquences vidéos selon l'une des revendications 1 à 3, **caractérisé en ce que** la transmission dudit premier flux est réalisée à travers un réseau large bande de type DSL (10).

10. Procédé pour la distribution de séquences vidéos selon l'une des revendications 1 à 3, **caractérisé en ce que** la transmission dudit premier flux est réalisée à travers un réseau de boucle locale radio.

11. Procédé pour la distribution de séquences vidéos selon l'une des revendications précédentes, dans lequel la transmission dudit deuxième flux est réalisée à travers un réseau téléphonique commuté.

12. Procédé selon la revendication précédente dans lequel le réseau téléphonique commuté est un réseau RTC analogique ou numérique.

13. Procédé pour la distribution de séquences vidéos selon l'une des revendications 1 à 10, **caractérisé en ce que** la transmission dudit deuxième flux est réalisée à travers un réseau de type DSL.

14. Procédé pour la distribution de séquences vidéos selon l'une des revendications 1 à 10, **caractérisé en ce que** la transmission dudit deuxième flux est réalisée à travers un réseau téléphonique mobile utilisant les normes GSM, GPRS ou UMTS.

15. Procédé pour la distribution de séquences vidéos selon l'une des revendications 1 à 10, **caractérisé en ce que** la transmission dudit deuxième flux est réalisée à travers un réseau de boucle locale radio.

16. Procédé pour la distribution de séquences vidéos selon l'une des revendications 7 à 10, **caractérisé en ce que** la transmission dudit deuxième flux est réalisée à travers un réseau large bande de même type que le réseau utilisé par ledit premier flux.

17. Procédé pour la distribution de séquences vidéos selon l'une des revendications 7 à 10, **caractérisé en ce que** la transmission dudit deuxième flux est réalisée à travers le même réseau large bande que celui utilisé par ledit premier flux.

18. Procédé pour la distribution de séquences vidéos selon l'une des revendications précédentes, **caractérisé en ce que** la transmission dudit deuxième flux est chiffrée.

19. Procédé pour la distribution de séquences vidéos selon l'une des revendications précédentes, **caractérisé en ce que** la transmission dudit premier flux est chiffrée.

20. Procédé pour la distribution de séquences vidéos selon l'une des revendications précédentes, **caractérisé en ce que** la reconstruction est conditionnée par un paiement.

21. Procédé pour la distribution de séquences vidéos selon l'une des revendications précédentes, **caractérisé en ce que** la reconstruction peut être autorisée pour une consultation d'une copie privée demandée par le client.

22. Equipement pour la fabrication d'un flux vidéo en vue de la mise en oeuvre du procédé selon la revendication 1, comportant au moins un serveur multimédia (12) contenant les séquences vidéos originelles et **caractérisé en ce qu'**il comporte un dispositif d'analyse du flux vidéo provenant dudit serveur pour générer les deux flux.

23. Equipement pour la fabrication d'un flux vidéo selon la revendication 22, **caractérisé en ce qu'**il comporte une mémoire pour l'enregistrement d'un marqueur « copie privée » indiquant pour chaque séquence les droits de chaque utilisateur : copie privée pouvant être regardée un nombre illimité de fois, copie privée pouvant être regardée un nombre limité de fois et quel nombre, copie privée interdite.

24. Equipement pour la fabrication d'un flux vidéo selon la revendication 22 ou 23, **caractérisé en ce que** les deux flux générés peuvent être dédiés à un seul équipement, à un groupe d'équipements ou à tous les équipements.

25. Equipement pour l'exploitation d'un flux vidéo en vue de la mise en oeuvre du procédé selon la revendication 1, comprenant un décodeur standard de flux (8), au moins une interface d'enregistrement (85) destiné à stocker le contenu dudit premier flux et au moins une interface d'affichage (6) **caractérisé en ce qu'**il comporte un moyen (87) pour la recomposition du flux originel à partir des deux flux.

26. Equipement pour l'exploitation d'un flux vidéo selon la revendication 25, **caractérisé en ce que** ledit moyen est une application logicielle installée sur l'équipement.

27. Equipement pour l'exploitation d'un flux vidéo selon la revendication 25, **caractérisé en ce que** ledit moyen est un dispositif électronique.

28. Equipement pour l'exploitation d'un flux vidéo selon l'une des revendications 25 à 27, **caractérisé en ce que** dans le cas de l'installation sur un ordinateur, ledit moyen utilise une ressource spécifique au produit afin d'éviter la copie de l'information temporaire sur un support permanent.

29. Equipement pour l'exploitation d'un flux vidéo selon l'une des revendications 25 à 28, **caractérisé en ce que** ladite interface d'enregistrement stocke aussi un marqueur « copie privée » en relation avec ledit premier flux indiquant pour cette séquence les droits de l'utilisateur : copie privée pouvant être regardée un nombre illimité de fois, copie privée pouvant être regardée un nombre limité de fois et quel nombre, copie privée interdite.

30. Equipement pour l'exploitation d'un flux vidéo selon l'une des revendications 25 à 29, **caractérisé en ce qu'**il comprend un lecteur de cartes à puce (82) permettant d'identifier le client quand il veut consulter une copie privée d'un programme.

31. Equipement pour l'exploitation d'un flux vidéo en vue de la mise en oeuvre du procédé selon la revendication 1, **caractérisé en ce qu'**il comporte un premier moyen constitué par un ordinateur personnel équipement d'une interface de communication (5, 9) pour la réception d'un flux vidéo en provenance d'un réseau de communication ou d'un lecteur de support physique, et muni d'au moins un moyen d'enregistrement (85) destiné à stocker le contenu dudit premier flux, et un second moyen constitué par un décodeur, comprenant une interface d'affichage (6), des moyens de communication avec ledit ordinateur principal pour recevoir ledit premier flux transmis par l'ordinateur et des moyens de communication pour recevoir ledit deuxième flux, ainsi qu'un moyen (87) pour la recomposition du flux originel à partir des deux flux.

32. Equipement pour l'exploitation d'un flux vidéo selon la revendication 31, **caractérisé en ce que** ledit moyen pour la recomposition du flux est une application logicielle installée sur ledit décodeur seulement.

33. Equipement pour l'exploitation d'un flux vidéo selon la revendication 31, **caractérisé en ce que** ledit moyen pour la recomposition du flux est un dispositif électronique installé sur ledit décodeur seulement.

34. Système pour la transmission d'un flux vidéo **caractérisé en ce qu'**il comprend un équipement de fabrication d'un flux vidéo selon l'une des revendications 22 à 24, au moins un équipement d'exploitation d'un flux vidéo selon l'une des revendications 25 à 33 et au moins un réseau de communication entre l'équipement de production et le(s) équipement(s) d'exploitation.

## Claims

1. A method for the distribution of video sequences from a server (12) to a receiving equipment (8), the video sequences having a nominal stream format (101) composed of a succession of frames, each including a complete image I or a differential image of the B or P type, the method including steps wherein:
prior to the transmission to the receiving equipment (8),
- said nominal stream (121) is analyzed so as to generate a first modified stream;
- a second stream is generated in any format, including the digital information able to allow the reconstruction of said nominal stream from said first modified stream;
then,
- both thus generated streams are transmitted separately from the server (12) to the receiving equipment (8);
- a synthesis of a stream in a nominal format is calculated (87) at the receiving equipment (8) as a function of said first stream and said second stream,
the method being **characterised in that**:
- said first modified stream has the same format as said nominal stream and includes at least one differential digital image of the B or P type modified with respect to said nominal stream.

2. A method according to one of the preceding claims, wherein the format of the nominal stream is defined by the MPEG standard.

3. A method for the distribution of video sequences according to one of the preceding claims, wherein said analysis can decide which differential images are to be modified.

4. A method for the distribution of video sequences according to one of the preceding claims, wherein the transmission of said first stream is performed through a physically distributed material medium.

5. A method according to the preceding claim, wherein the distributed material medium is a CD-ROM.

6. A method according to claim 4, wherein the distributed material medium is a hard disk.

7. A method for the distribution of video sequences according to one of claims 1 to 3, wherein the transmission of said first stream is performed through a broadband network (4).

8. A method according to the preceding claim, wherein the transmission of said first stream is performed through a cable, through a satellite, through a microwave digital network or through an optical fiber.

9. A method for the distribution of video sequences according to one of claims 1 to 3, **characterised in that** the transmission of said first stream is performed through a broadband network of the DSL type (10).

10. A method for the distribution of video sequences according to one of claims 1 to 3, **characterised in that** the transmission of said first stream is performed through a wireless local loop network.

11. A method for the distribution of video sequences according to one of the preceding claims, wherein the distribution of said second stream is performed through a public switched telephone network.

12. A method according to the preceding claim wherein the public switched telephone network is an analog or digital PST network.

13. A method for the distribution of video sequences according to one of claims 1 to 10, **characterised in that** the transmission of said second stream is performed through a network of the DSL type.

14. A method for the distribution of video sequences according to one of claims 1 to 10, **characterised in that** the transmission of said second stream is performed through a mobile telephone network using the GMS, GPRS or UMTS standards.

15. A method for the distribution of video sequences according to one of claims 1 to 10, **characterised in that** the transmission of said second stream is performed through a wireless local loop network.

16. A method for the distribution of video sequences according to one of claims 7 to 10, **characterised in that** the transmission of said second stream is performed through a broadband network of the same type as the network used by said first stream.

17. A method for the distribution of video sequences according to one of claims 7 to 10, **characterised in that** the transmission of said second stream is performed through the same broadband network as that used by said first stream.

18. A method for the distribution of video sequences according to one of the preceding claims, **characterised in that** the transmission of said second stream is enciphered.

19. A method for the distribution of video sequences according to one of the preceding claims, **characterised in that** the transmission of said first stream is enciphered.

20. A method for the distribution of video sequences according to one of the preceding claims, **characterised in that** the reconstruction is conditioned by a payment.

21. A method for the distribution of video sequences according to one of the preceding claims, **characterised in that** the reconstruction can be authorized for the access to one private copy requested by the client.

22. Equipment for the manufacturing of a video stream with a view to implementing the method according to claim 1, including at least one multimedia server (12) containing the original video sequences and **characterised in that** it includes a video stream analysis device from said server for generating both streams.

23. Equipment for the manufacturing of a video stream according to claim 22, **characterised in that** it includes a memory for saving a "private copy" marker indicating each user's rights on each sequence: a private copy which can be watched an infinite number of times, a private copy which can be watched a finite number of times and then which number, prohibited private copy.

24. Equipment for the manufacturing of a video stream according to claim 22 or 23, **characterised in that** both generated streams can be dedicated to only one piece of equipment, to a group of pieces of equipment or to the whole equipment.

25. Equipment for the operation of a video stream with a view of implementing of the method according to claim 1, including a standard stream decoder (8), at least one recording interface (85) intended to record the content of said first stream and at least a display interface (6) **characterised in that** it includes means (87) for the restoration of the original stream from the two streams.

26. Equipment for the operation of a video stream according to claim 25, **characterised in that** said means is a software application installed on the equipment.

27. Equipment for the operation of a video stream according to claim 25, **characterised in that** said means is an electronic device.

28. Equipment for the operation of a video stream according to one of claims 25 to 27, **characterised in that**, in the case of the installation in a computer, said means uses a resource specific to the product in order to prevent the duplication of the temporary information onto a permanent medium.

29. Equipment for the operation of a video stream according to one of claims 25 to 28, **characterised in that** said recording interface also records a "private copy" marker relative to said first stream indicating the user's rights on this sequence: a private copy which can be watched an infinite number of times, a private copy which can be watched a finite number of times and which number, a prohibited private copy.

30. Equipment for the operation of a video stream according to one of claims 25 to 29, **characterised in that** it includes a chip card reader (82) making it possible to identify the client when the latter wants to access to the private copy of a program.

31. Equipment for the operation of a video stream with a view to implementing a method according to claim 1, **characterised in that** it includes first means composed of a personal computer, the equipment of a communication interface (5,9) for the reception of a video stream from a communication network or a physical medium player, and provided with at least recording means (85) intended to record the content of said first stream, and a second means composed of a decoder including a display interface (6), communication means with said main computer for receiving said first stream transmitted by the computer and communication means for receiving said second stream, as well as means (87) for restoring the original stream from both streams.

32. Equipment for the operation of a video stream according to claim 31, **characterised in that** said means for the restoration of the stream is a software application installed in said decoder only.

33. Equipment for the operation of a video stream according to claim 31, **characterised in that** said means for restoring the stream is an electronic device installed in said decoder only.

34. A system for the transmission of a video stream, **characterised in that** it includes means for manufacturing a video stream according to one of claims 22 to 24, at least equipment for the operation of a video stream according to one of claims 25 to 33, and at least one communication network between the production equipment and the operation equipment/pieces of equipment.

## Patentansprüche

1. Verfahren für die Ausgabe von Videosequenzen ab einem Server (12) zu einer Empfängerausrüstung (8), wobei die Videosequenzen ein nominales Flussformat (101) haben, das durch eine Folge von Datenübertragungsblöcken gebildet wird, die jeweils ein komplettes Bild I oder ein Differentialbild vom Typ B oder P umfassen, wobei das Verfahren Stufen umfasst, in denen:
vor der Übertragung auf die Empfängerausrüstung (8)
- der genannte nominale Fluss analysiert (121) wird, um einen ersten abgeänderten Fluss zu generieren;
- ein zweiter Fluss in einem beliebigen Format generiert wird, der die digitalen Informationen umfasst, die geeignet sind, den Wiederaufbau des genannten nominalen Flusses ab dem genannten ersten abgeänderten Fluss zu erlauben;
dann
- werden separat die zwei auf diese Weise generierten Flüsse von dem Server (12) zur Empfängerausrüstung (8) übertragen;
- auf der Empfängerausrüstung (8) wird eine Synthese eines Flusses im nominalen Format in Abhängigkeit von dem genannten ersten Fluss und dem genannten zweiten Fluss berechnet,
wobei das Verfahren **dadurch gekennzeichnet ist, dass**:
- der genannte erste abgeänderte Fluss dasselbe Format hat wie der genannte nominale Fluss und wenigstens ein digitales differenziales Bild vom Typ B oder P umfasst, das im Verhältnis zum nominalen Fluss abgeändert ist.

2. Verfahren gemäß einem der vorherigen Ansprüche, in dem das Format im nominalen Fluss durch die Norm MPEG definiert ist.

3. Verfahren für die Ausgabe von Videosequenzen gemäß einem der vorherigen Ansprüche, in dem die genannte Analyse über die zu verändernden Differentialbilder entscheiden kann.

4. Verfahren für die Ausgabe von Videosequenzen gemäß einem der vorherigen Ansprüche, in dem die Übertragung des genannten ersten Flusses über einen Hardwareträger realisiert wird, der physisch ausgegeben wird.

5. Verfahren gemäß dem vorherigen Anspruch, in dem der ausgegebene Hardwareträger eine CD-ROM ist.

6. Verfahren gemäß Anspruch 4, in dem der ausgegebene Hardwareträger eine Festplatte ist.

7. Verfahren für die Ausgabe von Videosequenzen gemäß Anspruch 1 bis 3, in dem die Übertragung des genannten ersten Flusses über ein Breitbandnetz (4) realisiert ist.

8. Verfahren gemäß dem vorherigen Anspruch, in dem die Übertragung des genannten ersten Flusses per Kabel, per Satellit, per digitalem hertzschem Netz oder per Glasfaser realisiert wird.

9. Verfahren für die Ausgabe von Videosequenzen gemäß Anspruch 1 bis 3, **dadurch gekennzeichnet, dass** die Übertragung des genannten ersten Flusses über ein Breitbandnetz vom Typ DSL (10) realisiert ist.

10. Verfahren für die Ausgabe von Videosequenzen gemäß Anspruch 1 bis 3, **dadurch gekennzeichnet, dass** die Übertragung des genannten ersten Flusses über ein lokales Funkschleifennetz realisiert ist.

11. Verfahren für die Ausgabe von Videosequenzen gemäß einem der vorherigen Ansprüche, in dem die Übertragung des genannten zweiten Flusses über ein geschaltetes Telefonnetz realisiert ist.

12. Verfahren gemäß dem vorherigen Anspruch, in dem das geschaltete Telefonnetz ein analoges oder digitales CTR-Netz ist.

13. Verfahren für die Ausgabe von Videosequenzen gemäß Anspruch 1 bis 10, **dadurch gekennzeichnet, dass** die Übertragung des genannten zweiten Flusses über ein Netz vom Typ DSL realisiert ist.

14. Verfahren für die Ausgabe von Videosequenzen gemäß Anspruch 1 bis 10, **dadurch gekennzeichnet, dass** die Übertragung des genannten zweiten Flusses über ein mobiles Telefonnetz realisiert ist, das die Normen GSM, GPRS oder UMTS nutzt.

15. Verfahren für die Ausgabe von Videosequenzen gemäß Anspruch 1 bis 10, **dadurch gekennzeichnet, dass** die Übertragung des genannten zweiten Flusses über ein lokales Funkschleifennetz realisiert ist.

16. Verfahren für die Ausgabe von Videosequenzen gemäß Anspruch 7 bis 10, **dadurch gekennzeichnet, dass** die Übertragung des genannten zweiten Flusses über ein Breitbandnetz von demselben Typ wie das Netz realisiert ist, das von dem genannten ersten Fluss genutzt wird.

17. Verfahren für die Ausgabe von Videosequenzen gemäß Anspruch 7 bis 10, **dadurch gekennzeichnet, dass** die Übertragung des genannten zweiten Flusses über dasselbe Breitbandnetz realisiert ist wie das, das von dem genannten ersten Fluss genutzt wird.

18. Verfahren für die Ausgabe von Videosequenzen gemäß einem der vorherigen Ansprüche, **dadurch gekennzeichnet, dass** die Übertragung des genannten zweiten Flusses verschlüsselt ist.

19. Verfahren für die Ausgabe von Videosequenzen gemäß einem der vorherigen Ansprüche, **dadurch gekennzeichnet, dass** die Übertragung des genannten ersten Flusses verschlüsselt ist.

20. Verfahren für die Ausgabe von Videosequenzen gemäß einem der vorherigen Ansprüche, **dadurch gekennzeichnet, dass** der Wiederaufbau durch eine Zahlung bedingt ist.

21. Verfahren für die Ausgabe von Videosequenzen gemäß einem der vorherigen Ansprüche, **dadurch gekennzeichnet, dass** der Wiederaufbau für eine Einsicht einer vom Kunden verlangten privaten Kopie genehmigt werden kann.

22. Verfahren für die Herstellung eines Videoflusses im Hinblick auf die Umsetzung des Verfahrens gemäß Anspruch 1, das wenigstens einen Multimediaserver (12) umfasst, der die Originalvideosequenzen umfasst und **dadurch gekennzeichnet, dass** er eine Analysevorrichtung des Videoflusses umfasst, der aus dem genannten Server stammt, um die zwei Flüsse zu generieren.

23. Ausrüstung für die Herstellung eines Videoflusses gemäß Anspruch 22, **dadurch gekennzeichnet, dass** sie einen Speicher für die Speicherung einer Anzeigetafel "private Kopie" umfasst, die für jede Sequenz die Rechte jedes Nutzes anzeigt:
private Kopie, die eine unbegrenzte Anzahl von Malen angesehen werden kann, private Kopie, die eine begrenzte Anzahl von Malen und welche Anzahl angesehen werden kann, private verbotene Kopie.

24. Ausrüstung für die Herstellung eines Videoflusses gemäß Anspruch 22 oder 23, **dadurch gekennzeichnet, dass** die zwei generierten Flüsse einer einzigen Ausrüstung, einer Gruppe von Ausrüstungen oder allen Ausrüstungen dediziert werden können.

25. Ausrüstung für die Nutzung eines Videoflusses im Hinblick auf die Umsetzung des Verfahrens gemäß Anspruch 1, das einen standardmäßigen Flussdekodierer (8), wenigstens eine Aufnahmeschnittstelle (25), die zur Speicherung des Inhaltes des genannten ersten Flusses bestimmt ist, und wenigstens eine Anzeigeschnittstelle (6) umfasst, **dadurch gekennzeichnet, dass** sie ein Mittel (87) für die Wiederzusammensetzung des Originalflusses aus den zwei Flüssen umfasst.

26. Ausrüstung für die Nutzung eines Videoflusses gemäß Anspruch 25, **dadurch gekennzeichnet, dass** das genannte Mittel eine auf der Ausrüstung installierte Software-Anwendung ist.

27. Ausrüstung für die Nutzung eines Videoflusses gemäß Anspruch 25, **dadurch gekennzeichnet, dass** das genannte Mittel eine elektronische Vorrichtung ist.

28. Ausrüstung für die Nutzung eines Videoflusses gemäß Anspruch 25 bis 27, **dadurch gekennzeichnet, dass** das genannte Mittel in dem Fall einer Installation in einem Computer eine spezifische Ressource des Produkts verwendet, um die Kopie der vorübergehenden Information auf einem permanenten Träger zu verhindern.

29. Ausrüstung für die Nutzung eines Videoflusses gemäß Anspruch 25 bis 28, **dadurch gekennzeichnet, dass** die genannte Speicherschnittstelle ebenfalls eine Anzeigetafel "private Kopie" in Verbindung mit dem genannten ersten Fluss speichert, die für diese Sitzung die Rechte des Nutzers anzeigt:
private Kopie, die eine unbegrenzte Anzahl von Malen genutzt werden kann, private Kopie, die eine begrenzte Anzahl von Malen und welche Anzahl genutzt werden kann, private verbotene Kopie.

30. Ausrüstung für die Nutzung eines Videoflusses gemäß Anspruch 25 bis 29, **dadurch gekennzeichnet, dass** sie ein Chipkartenlesegerät (82) umfasst, das die Identifikation des Kunden ermöglicht, wenn er eine private Kopie eines Programms einsehen möchte.

31. Ausrüstung für die Nutzung eines Videoflusses zur Umsetzung des Verfahrens gemäß Anspruch 1, **dadurch gekennzeichnet, dass** es ein erstes Mittel umfasst, das durch einen Personalcomputer gebildet wird, eine Ausrüstung einer Kommunikationsschnittstelle (5, 9) für den Empfang eines Videoflusses aus einem Kommunikationsnetz oder einem physischen Trägerlesegerät, und mit wenigstens einem Speichermittel (85) versehen ist, das zum Speichern des Inhaltes des genannten ersten Flusses bestimmt ist, und einem, durch einen Dekodierer gebildeten zweiten Mittel, das eine Anzeigeschnittstelle (6), Kommunikationsmittel mit dem genannten Hauptcomputer zum Empfangen des genannten ersten Flusses, der durch den Computer übertragen wird, und Kommunikationsmittel zum Empfangen des genannten zweiten Flusses, sowie ein Mittel (87) für die Wiederzusammensetzung des Originalfilms aus den zwei Flüssen umfasst.

32. Ausrüstung für die Nutzung eines Videoflusses gemäß Anspruch 31, **dadurch gekennzeichnet, dass** das genannte Mittel für die Wiederzusammensetzung des Flusses eine Software-Anwendung ist, die nur auf dem genannten Dekodierer installiert ist.

33. Ausrüstung für die Nutzung eines Videoflusses gemäß Anspruch 31, **dadurch gekennzeichnet, dass** das genannte Mittel für die Wiederzusammensetzung des Flusses eine elektronische Vorrichtung ist, die nur auf dem genannten Dekodierer installiert ist.

34. System für die Übertragung eines Videoflusses, **dadurch gekennzeichnet, dass** es eine Herstellungsausrüstung eines Videoflusses gemäß Anspruch 22 bis 24, wenigstens eine Nutzungsausrüstung eines Videoflusses gemäß Anspruch 25 bis 33 und wenigstens ein Kommunikationsnetz zwischen der Produktionsausrüstung und der / den Nutzungsausrüstung(en) umfasst.
